(19) Europäisches Patentamt
European Patent Office
Office européen des brevets

(11) **EP 1 864 451 B1**

(12) **FASCICULE DE BREVET EUROPEEN**

(45) Date de publication et mention
de la délivrance du brevet:
**01.07.2009 Bulletin 2009/27**

(21) Numéro de dépôt: **06743573.5**

(22) Date de dépôt: **13.03.2006**

(51) Int Cl.:
**H04L 12/56** *(2006.01)*    **H04L 12/24** *(2006.01)*

(86) Numéro de dépôt international:
**PCT/FR2006/000553**

(87) Numéro de publication internationale:
**WO 2006/095100 (14.09.2006 Gazette 2006/37)**

(54) **PROCEDE D'EVALUATION NUMERIQUE D'UN RESEAU DE TRANSMISSION DE DONNEES**

VERFAHREN ZUR DIGITALEN BEWERTUNG EINES DATENÜBERTRAGUNGSNETZES

METHOD FOR THE DIGITAL EVALUATION OF A DATA TRANSMISSION NETWORK

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **11.03.2005 US 660439 P**

(43) Date de publication de la demande:
**12.12.2007 Bulletin 2007/50**

(73) Titulaires:
• **Garcia, Jean-Marie**
  **31500 Toulouse (FR)**
• **Brun, Olivier**
  **31550 Aignes (FR)**
• **Gauchard, David**
  **31570 Lanta (FR)**

(72) Inventeurs:
• **Garcia, Jean-Marie**
  **31500 Toulouse (FR)**
• **Brun, Olivier**
  **31550 Aignes (FR)**
• **Gauchard, David**
  **31570 Lanta (FR)**

(74) Mandataire: **Callon de Lamarck, Jean-Robert et al**
**Cabinet Regimbeau**
**20 rue de Chazelles**
**75847 Paris cedex 17 (FR)**

(56) Documents cités:
• **D. GAUCHER: "Simulation Hybride des Réseaux IP-DiffServ-MPLS Multi-services sur Environnement d?Exécution Distribuée" DOCTORAT DE L?UNIVERSITE TOULOUSE III, [Online] 25 avril 2003 (2003-04-25), pages 1-14-123-134, XP002394748 Extrait de l'Internet: URL:http://hal.ccsd.cnrs.fr/docs/00/04/90/ 98/PDF/tel-00011034.pdf> [extrait le 2006-08-11] cité dans la demande**
• **S. BOHACEK, J. HESPANHA, J. LEE, K. OBRACZKA: "A Hybrid Systems Modeling Framework for Fast and Accurate Simulation of Data Communication Networks"[Online] 10 juin 2003 (2003-06-10), pages 58-69, XP002394749 Extrait de l'Internet: URL:http://delivery.acm.org/ 10.1145/790000 /781036/p58-bohacek.pdf? key1=781036&key2=4 856825511&coll=ACM&dl=ACM&CFID=1515151 5&CF TOKEN=6184618> [extrait le 2006-08-11]**
• **YU GU ET AL: "On integrating fluid models with packet simulation" INFOCOM 2004. TWENTY-THIRD ANNUALJOINT CONFERENCE OF THE IEEE COMPUTER AND COMMUNICATIONS SOCIETIES HONG KONG, PR CHINA 7-11 MARCH 2004, PISCATAWAY, NJ, USA,IEEE, vol. 4, 7 mars 2004 (2004-03-07), pages 2856-2866, XP010740648 ISBN: 0-7803-8355-9**
• **FIGUEIREDO ET AL: "On the efficiency of fluid simulation of networks" COMPUTER NETWORKS, ELSEVIER SCIENCE PUBLISHERS B.V., AMSTERDAM, NL, vol. 50, no. 12, 24 août 2006 (2006-08-24), pages 1974-1994, XP005510605 ISSN: 1389-1286**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE DE L'INVENTION

L'invention concerne un procédé d'évaluation numérique d'un réseau de transmission de données.
L'invention s'applique en particulier à l'évaluation numérique de réseaux de transmission de données à commutation de paquets, tels que par exemple les réseaux communément appelés réseaux IP (Internet Protocol), réseaux MPLS (MultiProtocol Label Switching) ou réseaux ATM (Asynchronous Tranfer Mode).

ETAT DE LA TECHNIQUE

L'évaluation numérique des réseaux peut être utilisée en particulier pour optimiser le dimensionnement et/ou le fonctionnement d'un réseau réel, pour simuler le comportement d'un réseau suite à un changement intervenant sur au moins un de ses éléments, ou pour optimiser le routage des données dans un réseau.
On connaît déjà plusieurs types de procédés d'évaluation numérique de tels réseaux de transmission.
Dans un premier type de procédé connu, il est réalisé une évaluation dite événementielle ou stochastique consistant essentiellement à générer, en général aléatoirement, des données descriptives d'événements chronologiques au niveau de noeuds du réseau, concernant des paquets de flux de données transitant dans le réseau. Ce procédé permet notamment de représenter des événements se produisant au niveau de files d'attente (mémoires tampon) des dispositifs matériels, tel que des événements de réception et des événements de restitution de paquets.
Les références suivantes illustrent ce premier exemple de procédé connu :

- Simulation Modeling and Analysis (Third Edition), Averill M. Law & W. David Kelton, Editeur : McGraw-Hill, 2000 (760 pages),
- Simulation, by Sheldon M. Ross, Academic Press, 3ième édition (27 Décembre, 2001), ISBN: 0125980531,
- Simulation Techniques for Discrete Event Systems (Cambridge Computer Science Texts), I. Mitrani, 194 pages, Cambridge University Press (9 Décembre, 1982), ISBN: 0521238854,
- Discrete-Event System Simulation (3rd Edition), Jerry Banks, John S. Carson , Barry L. Nelson, David M. Nicol, Prentice Hall, 3ième édition (15 août, 2000), ISBN: 0130887021.

Un premier exemple de procédé d'évaluation événementielle selon la technique dite de Monte-Carlo, consiste à déterminer un comportement transitoire du réseau à partir d'événements tirés aléatoirement pour générer un ensemble de comportements possibles. Le comportement transitoire du réseau peut être déduit de statistiques sur les comportements générés. Un autre exemple de procédé d'évaluation événementielle selon la technique de Monte-Carlo, consiste à déterminer un comportement en régime permanent du réseau à partir d'événements tirés aléatoirement. La technique de Monte-Carlo produit des résultats précis. Elle permet notamment de fournir une représentation des flux entièrement événementielle à l'intérieur du réseau, ce qui est nécessaire pour simuler la circulation des paquets et évaluer de façon précise certains paramètres de fonctionnement des réseaux actuels, par exemple les phénomènes de perte de paquets de données et les causes de telles pertes, ainsi que les délais et la gigue. Cela est tout particulièrement vrai pour les réseaux réalisant la transmission de paquets appartenant à des classes de services prédéterminés (champ TOS d'IP ou champ DSCP de MPLS), par exemple des services (audio, vidéo, multimédia, données, interactifs ou non ...) pour les réseaux IP (Internet Protocol), MPLS (MultiProtocol Label Switching), GPRS (General Packet Radio Service) ou UMTS (Universal Mobile Telecommunication System).
Ce type de procédé d'évaluation événementielle présente néanmoins l'inconvénient d'entraîner des temps de calcul très importants, qui deviennent rédhibitoires pour évaluer les réseaux réels actuels, compte tenu de l'augmentation permanente de leur taille et de leur bande passante, et donc de la complexité des routages, et des grandes quantités de données à transmettre pour chaque transaction.
Pour réduire les temps de calcul, différentes solutions ont été proposées.
Par exemple, on a proposé une technique de réduction de variance. On a également envisagé l'utilisation de machines en parallèle. Néanmoins, en pratique, toutes ces techniques ne permettent pas d'obtenir des gains de temps suffisants.
Un deuxième type d'évaluation connue consiste à réaliser une évaluation dite analytique différentielle.
On pourra à cet égard se référer à la publication suivante :

- Modélisation Différentielle Du Trafic et Simulation Hybride Distribuée, Jean-Marie Garcia et al, Calculateurs Parallèles volume 13 numéro 6/2001, pages 635 à 664.

Dans l'évaluation analytique, chaque file d'attente (mémoire tampon) de chaque dispositif matériel du réseau de transmission de données correspond à un noeud d'un réseau de files d'attentes de paquets, ce réseau étant décrit par :

- un ensemble de sources produisant, avec un débit $\lambda_k(t)$, des paquets allant d'un noeud origine o(k) à un noeud de destination d(k),
- des équations analytiques issues de la théorie du trafic différentiel permettent de modéliser des noeuds.

La forme générale de ces équations est la suivante :

$$\frac{dX_i^k(t)}{dt} = TE_i^k\left(t, k, \lambda_i^{s(1)}(t), \ldots \lambda_i^{s(i)}(t), X_i^{s(1)}(t), \ldots, X_i^{s(i)}(t), \mu\right)$$

$$-TS_i^k\left(t, k, \lambda_i^{s(1)}(t), \ldots, \lambda_i^{s(i)}(t), \ldots, X_i^{s(i)}(t), \mu\right)$$

$$k = s(1)\ldots s(K_i)$$

où :

t est le temps,
$s(1)\ldots s(K_i)$ représente les $K_i$ flux arrivant au noeud i, $K_i$ étant un nombre entier non nul,

$\lambda_i^k(t)$ et $X_i^k(t)$, avec $k = s_i(K_i)$ sont respectivement les débits et les charges induites par chaque source dans le noeud i,
$\mu$ est le taux de service,

et $TE_i^k$ et $TS_i^k$ sont les débits d'entrée et de sortie dont les expressions sont données par le modèle analytique différentiel considéré. Ce modèle, généralement non-linéaire, dépend de la loi (distribution) de service, de la loi (distribution) d'arrivée et du fait qu'il existe un ordonnancement des paquets plus ou moins complexe, pouvant prendre en considération, par exemple, des classes de service.

Pour représenter le transit des paquets d'un noeud vers un autre noeud, il est nécessaire de coupler ces équations. Ce couplage est réalisé avec des coefficients $r_{ij}^k(t)$, chaque coefficient déterminant une fraction du trafic issu de la source k dans le noeud i à propager vers le noeud j. En particulier, des coefficients $r_{ij}^k(t)$, de valeurs

unitaires ou nulles peuvent être employés pour représenter un routage dans lequel la totalité du trafic k de chaque noeud i est propagé vers un seul noeud j.
Deux types d'évaluation analytiques sont connus :

1/ L'évaluation analytique transitoire.

Dans ce cas, l'évaluation est discrétisé par pas de durée $\Delta t$. A chaque pas, et pour chaque noeud i et chaque source k du réseau, chaque paramètre $TE_i^k$ est la somme des $r_{ij}^k(t) \cdot TS_j^k(t)$ (pour tous les $r_{ij}^k(t)$ non nuls),

et les équations sont intégrées pour mettre à jour $X_i^k(t)$ et les taux de sortie $TS_i^k$.

2/ L'évaluation analytique stationnaire.

Dans ce cas, à l'état stationnaire du réseau, toutes les dérivées par rapport au temps sont nulles. La recherche de l'état stationnaire consiste à exécuter un algorithme de point fixe sur l'ensemble des équations $TS_i^k - TE_i^k$.

Ce type d'évaluation, basée sur une simulation fluide des flux au sein du réseau, est relativement rapide, mais ne permet pas néanmoins de simuler avec précision tous les types de flux de données pouvant circuler dans un réseau réel. Ce type d'évaluation ne permet pas non plus d'observer le cheminement d'un paquet de données dans le réseau, ni d'obtenir des données descriptives des événements survenant sur chaque paquet. Autrement dit, cette évaluation analytique différentielle ne permet pas de représenter les flux de façon événementielle à travers le réseau.
Un troisième type d'évaluation connue, appelée évaluation « hybride » consiste à tirer partie de l'évaluation événementielle et de l'évaluation analytique.
Dans un modèle d'évaluation hybride, certains éléments du réseau sont simulés avec des équations différentielles analytiques tandis que les autres éléments, en général plus complexes, sont simulés à l'aide d'une modélisation stochastique à évènements discrets.
Un premier principe de modélisation hybride, appelé « principe de modélisation hybride par partitionnement » consiste à diviser le réseau en sous-parties, certaines sous-parties étant traitées grâce à des modèles analytiques et d'autres sous-parties étant traitées grâce à des modèles événementiels.
Par exemple, l'ensemble des sources de trafic et des noeuds frontières du réseau (Customer Equipment) sont simulés événementiellement tandis que le coeur du réseau est simulé analytiquement (entre les routeurs « Edge »).
Cette, « hybridation » de l'évaluation résulte du fait que la superposition des trafics multiples (individuellement non Poissonniens) au niveau des « Routeurs Edge », se compose en un trafic agrégé tendant vers une loi de Poisson. Cette propriété a été vérifiée par de multiples simulations menées sur différents types de sources. D'autre part, le coeur de réseau est souvent la partie la moins chargée et les hypothèses considérées donnent de bons résultats dans ce cas.
Cependant, le principe de modélisation hybride par partitionnement ne permet généralement pas de représenter un flux de bout en bout circulant dans le réseau de façon entièrement événementielle, sauf à utiliser une évaluation événementielle pour chacun des noeuds traversés par le flux. Cependant, cela imposerait que chaque flux traversant un noeud simulé, soit également lui-même représenté de façon événementielle. Il en résulte une charge de calcul et des temps de traitement rédhibitoires.
Un deuxième principe de modélisation hybride, appelé « principe de modélisation hybride par superposition » consiste à simuler de manière évènementielle uniquement les flux dont on souhaite évaluer précisément la qualité de service, et d'utiliser des modèles analytiques, plus rapides, pour évaluer le reste de la charge du réseau.
Ce principe de simulation permet de réduire autant qu'on le souhaite la complexité calculatoire de la simulation événementielle tout en maintenant des simulations très précises, de bout en bout, pour tous les paquets émis par un flux.
Une approche spécifique de ce principe a été proposée dans le document suivant :

-    Simulation hybride des réseaux IP-Diff-Serv-MPLS multi-services sur environnement d'exécution distribuée, David Gauchard, 25 avril 2003, rapport LAAS n˚03544.

Le principe de modélisation hybride par superposition est illustré dans le cas simplifié d'un noeud comprenant une interface d'entrée incluant une file d'attente unique. L'interface reçoit d'une part un flux analytique émis par une source analytique et d'autre part un flux évènementiel (sous la forme de paquets de données) émis par une source événementielle.
Bien que ce document prévoit qu'une évaluation du réseau, utilisant le principe de modélisation hybride par superposition, conduise à des résultats satisfaisants, ce document ne présente pas de solution permettant d'appliquer cette évaluation hybride aux cas complexes de noeuds comprenant une interface d'entrée incluant une pluralité de files d'attente, dans lequel les files d'attente sont gérées suivant une loi de service quelconque.

RESUME DE L'INVENTION

Un but de l'invention est de proposer un procédé d'évaluation numérique d'un réseau de transmission de données basé sur une superposition hybride et adapté pour prendre en compte des noeuds présentant des interfaces d'entrée ou de sortie complexes.

Ce problème est résolu dans le cadre de la présente invention grâce à un procédé conforme à la revendication 1.

Un tel procédé permet d'évaluer les performances et de simuler la propagation des flux de paquets de données, analytiques et évenementiels d'un bout à l'autre des chemins parcourus par ces flux, en tenant compte des classes de service associées à ces flux, des lois de services et des lois d'ordonnancement complexes régissant les files d'attente des interfaces traversées par ces flux au sein du réseau.

Les revendications dépendantes 2 à 12 définissent des caractéristiques de mise en oeuvre avantageuses du procédé de l'invention.

L'invention concerne également un dispositif selon la revendication 13.

PRESENTATION DES FIGURES

D'autres caractéristiques et avantages ressortiront encore de la description qui suit, laquelle est purement illustrative et non limitative et doit être lue en regard des figures annexées, parmi lesquelles :

- la figure 1 représente de manière schématique un réseau de transmission de données,
- la figure 2 représente de manière schématique un noeud du réseau de transmission de données,
- la figure 3 représente de manière schématique une interface d'entrée d'un noeud,
- la figure 4 représente de manière schématique une application du principe de superposition hybride à un réseau de transmission de données,
- la figure 5 représente de manière schématique les étapes d'un procédé d'évaluation numérique d'un réseau de transmission, conforme à un mode de mise en oeuvre de l'invention,
- la figure 6 représente de manière schématique un exemple de mise en oeuvre du procédé correspondant au cas d'une interface présentant une pluralité de files d'attente gérées par une loi de service complexe,
- la figure 7 est un schéma illustrant une interface comprenant une seule file d'attente réceptrice de paquets entrants, selon un premier exemple de mise en oeuvre du procédé de l'invention,
- la figure 8 est un graphique représentant l'évolution dans le temps de la charge d'une file d'attente en fonction d'événements chronologiques de réceptions et d'événements chronologiques de restitutions,

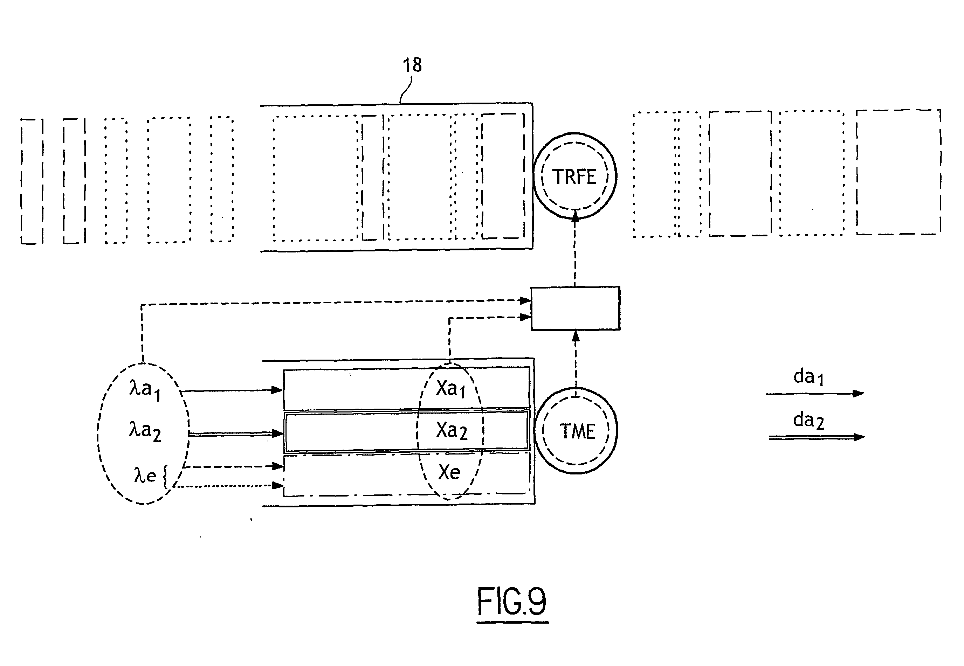

- la figure 9 illustre le principe de l'évaluation hybride par superposition tel qu'appliqué, selon le premier exemple de mise en oeuvre du procédé d'évaluation de l'invention, à l'interface de la figure 7,
- la figure 10 est un schéma illustrant une interface réalisant un procédé de gestion des files d'attentes par priorité, selon un deuxième exemple de mise en oeuvre du procédé de l'invention,
- la figure 11 illustre le principe de l'évaluation hybride par superposition tel qu'appliqué, selon le deuxième exemple de mise en oeuvre du procédé d'évaluation de l'invention, au port de la figure 10.

DEFINITIONS

On désigne par « noeud », tout dispositif matériel réalisant une fonction de routage de flux de données dans un réseau de transmission de données.

A titre d'exemple un routeur IP, un ordinateur réalisant un routage IP logiciel, un commutateur MPLS (Multiprotocol Label Switching), un routeur ATM (Asynchronous Transfer Mode), un commutateur Ethernet, ou tout autre dispositif permettant une commutation de paquets de données peut constituer un noeud. En outre, un répéteur, tel qu'un dispositif communément appelé « hub », un satellite, ou tout autre dispositif permettant de transmettre des paquets de données peut constituer un noeud.

On désigne par « liaison de transmission », tout moyen permettant un transport de flux de données d'un noeud à un autre dans un réseau de transmission de données.

Une liaison de transmission peut être réalisée par tous moyens de transmission filaire, radiofréquence, ou tout autre type de moyen de transmission de données entre des noeuds.

On désigne par « interface », un port d'entrée ou de sortie de données dans un noeud.

On entend par « mode de fonctionnement analytique », un mode de fonctionnement d'une interface d'un noeud modélisé par une ou plusieurs équations différentielles obtenues via des relations analytiques non-linéaires régissant des flux analytiques de données traversant le noeud.

On entend par « mode de fonctionnement évenementiel», un mode de fonctionnement d'une interface modélisé par des événements discrets représentant un ou plusieurs flux évenementiels traversant le noeud et dont le comportement moyen peut être connu en utilisant des méthodes statistiques.

On entend par « mode de fonctionnement hybride », un mode de fonctionnement d'une interface d'un noeud régissant à la fois des flux analytiques et des flux évenementiels de données.

On entend par « taux de service » ou « taux de restitution », un débit auquel des données entrant dans une interface d'un noeud sont transmises (ou restituées) par l'interface.

## DESCRIPTION DETAILLEE D'UN MODE DE REALISATION

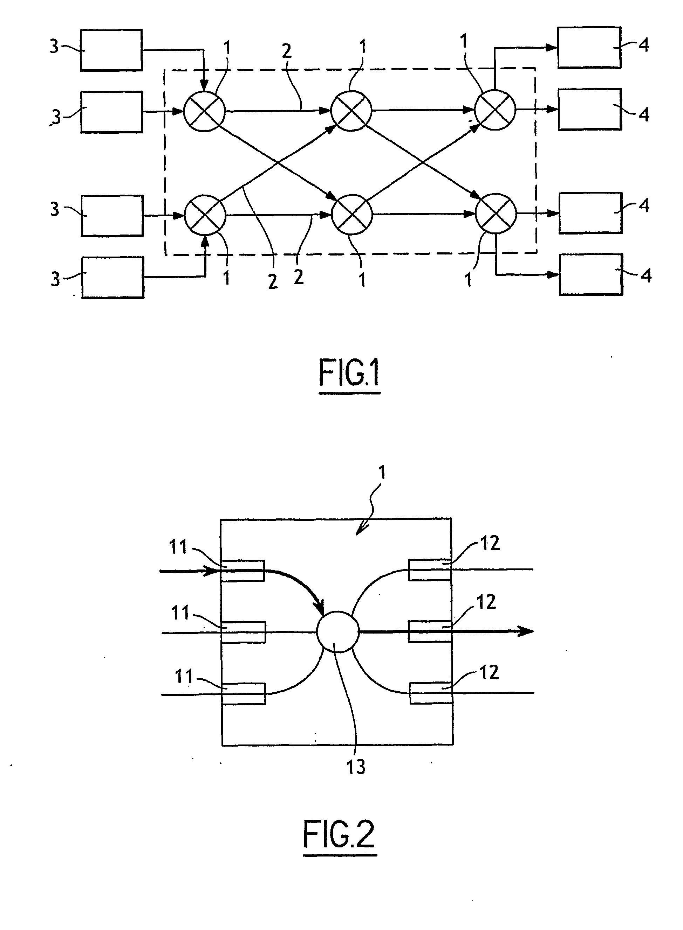

La figure 1 représente de manière schématique un réseau de transmission de données, tel que par exemple un réseau de transmission de données par commutation de paquets. Le réseau comprend une pluralité de noeuds 1 et une pluralité de liaisons 2 de transmission de données s'étendant entre les noeuds 1.

Ce réseau réalise la transmission de paquets de données fournis par des sources 3 de paquets associées à des dispositifs matériels, dits dispositifs matériels sources, et transmis dans le réseau par ces dispositifs matériels sources. A titre d'exemple non limitatif, une application logicielle, productrice de paquets, chargée dans une mémoire vive d'un dispositif matériel peut constituer une telle source de paquets. Par ailleurs chaque source 3 de paquets peut provenir d'un organe matériel du dispositif matériel source correspondant. Par exemple, un port (non représenté dans les figures) de transmission de données entre le dispositif matériel source et des dispositifs matériels (non représentés dans les figures) à l'extérieur du réseau peut constituer une telle source de paquets.

Chaque source 3 de paquets produit des paquets acheminés par le réseau vers un dispositif matériel de destination 4 selon un trajet 5 d'acheminement simple ou multiple.

La figure 2 représente de manière schématique un noeud 1 du réseau de transmission de données.

Le noeud 1 comprend au moins une interface d'entrée 11 (ou port d'entrée), une interface de sortie 12 (ou port de sortie) et un module de routage 13 (appelé également coeur de commutation ou matrice de commutation).

Chaque interface d'entrée 11 est adaptée pour recevoir des, données en provenance d'une source ou d'un autre noeud via une liaison du réseau.

De même, chaque interface de sortie 12 est adaptée pour émettre des données vers un autre noeud ou dispositifs matériels de destination via une liaison du réseau.

Le module de routage 13 est adapté pour router des données reçues d'une interface d'entrée 11 vers une interface de sortie 12.

Chaque interface peut en outre être adaptée pour mettre en oeuvre des processus connus permettant de rejeter des paquets de données avant la saturation des mémoires tampon, tels que des mécanismes dits RED, (Rejet Aléatoire Anticipé), ou WRED (Rejet Aléatoire Anticipé Pondéré).

Chaque interface peut en outre réaliser des procédés connus, dits de police, et des procédés connus, dits CAR, permettant de limiter le débit de certains flux de paquets.

En outre, chaque port peut réaliser des processus connus de mise en forme de trafic, dits de *shapping.*

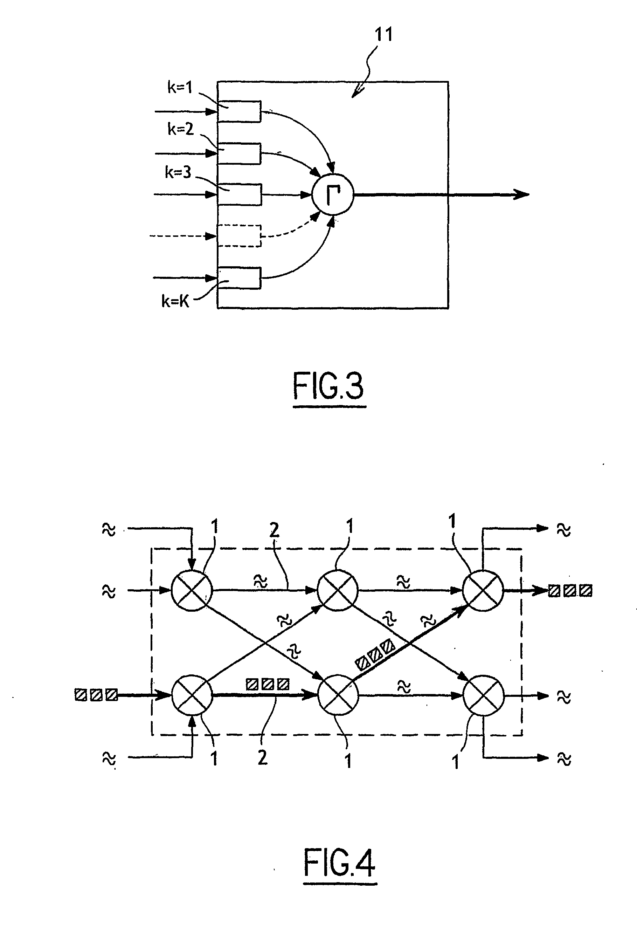

La figure 3 représente de manière schématique une interface d'entrée 11 d'un noeud 1.

L'interface 11 comprend une pluralité de files d'attente k ($k$ =1...$K$) comprenant par exemple des mémoires FIFO ou PAPS mettant en oeuvre une discipline d'attente du type premier arrivé premier servi.

Les files d'attente k reçoivent et stockent des paquets de données entrants. Chaque paquet de données entrant est réparti dans l'une des files en fonction de la classe de service associée au paquet. Par exemple, un paquet de classe k est introduit dans la file k correspondante. Chaque file d'attente est associée à une ou plusieurs classes de service.

Les paquets de données sont pris en charge par l'interface d'entrée 11 en fonction d'une loi de service $\Gamma$ qui régit les files d'attente.

La figure 4 représente de manière schématique une application du principe de superposition hybride à un réseau de transmission de données, tel que celui de la figure 1.

On simule de manière événementielle un flux de données (□□□) auquel est associée une classe de service donnée et dont on souhaite évaluer précisément la qualité de service. Les autres flux (≈) sont simulés de manière analytique de manière à prendre en compte le reste de la charge du réseau.

Parmi les noeuds du réseau, certains présentent une interface qui reçoit uniquement des données sous la forme de flux analytiques (≈). Une telle interface est alors identifiée comme une interface ayant un mode de fonctionnement analytique.

D'autres noeuds présentent une interface qui reçoit uniquement des données sous la forme d'un flux événementiel (□□□). Une telle interface est alors identifiée comme une interface ayant un mode de fonctionnement événementiel.

D'autres noeuds encore présentent une interface qui reçoit à la fois des données sous la forme de flux analytiques et des données sous la forme d'un flux événementiel. Une telle interface est alors identifiée comme une interface ayant un mode de fonctionnement hybride.

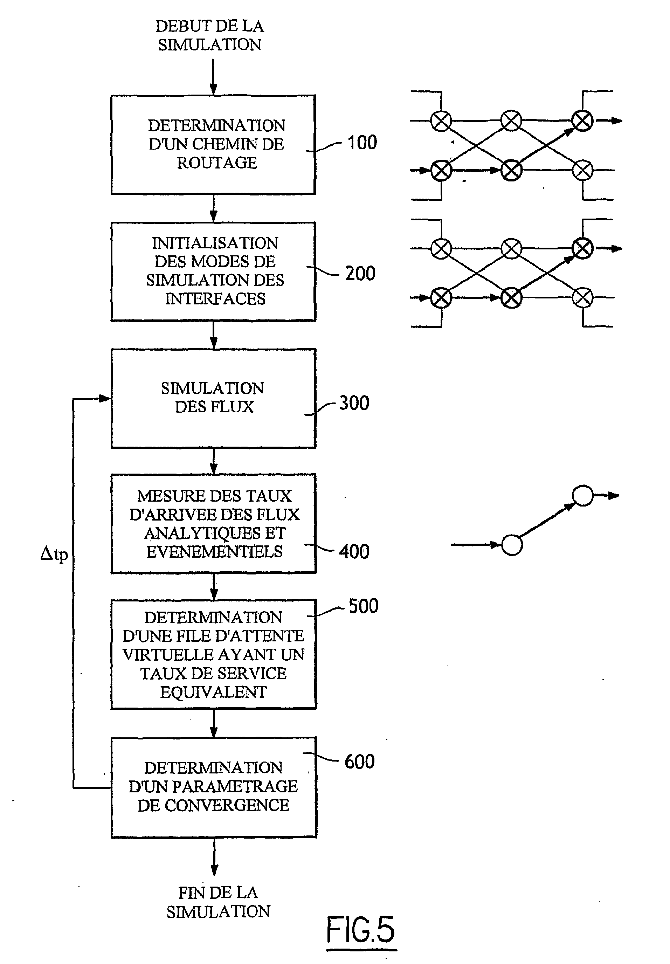

La figure 5 représente de manière schématique les étapes principales d'un procédé d'évaluation numérique du réseau de transmission.

Il s'agit de choisir un ou plusieurs flux de données qui seront simulés événementiellement d'un bout à l'autre de leurs chemins à travers le réseau, alors que le reste des flux est simulé par des équations différentielles. Ce mode de simulation permet de réduire autant qu'on le souhaite la complexité calculatoire de la simulation événementielle tout en maintenant des simulations très précises, de bout en bout, pour tous les paquets émis par un flux.

Selon une première étape 100, on propage une pluralité de flux multi-classes via l'ensemble des noeuds et des interfaces des noeuds, par lesquelles passent ces flux. Une loi de routage (table de routage IP ou table de routage MPLS donnant un LSP) permet de déterminer par quelles interfaces passent tous les flux multi-classes de bout en bout. Ces chemins dépendent de la destination des flux mais peuvent aussi dépendre du type d'application ou de service et des classes des flux. Dans une interface, c'est la classe d'un flux qui détermine une file d'attente à laquelle les paquets du flux seront affectés.

En particulier, on détermine, pour un flux de données auquel est associée une classe de service, un chemin de routage passant par une pluralité de noeuds du réseau.

Selon une deuxième étape 200, on détermine, parmi les noeuds du chemin de routage et pour chaque flux de donnée événementiel, les noeuds qui possèdent une interface d'entrée ou une interface de sortie qui reçoit à la fois au moins un flux de données événementiel et au moins un flux de données analytique. Autrement dit, on identifie les interfaces ayant un mode de fonctionnement hybride.

Selon une troisième étape 300, on initialise des modes de simulation des interfaces des noeuds. Autrement dit, on détermine un mode de simulation pour chaque interface. Le mode de simulation (dans l'hypothèse où l'on conserve les mêmes flux événementiels et analytiques au cours de la simulation). Pour chaque interface et chaque file d'attente de cette interface (multi-classe), on résout les cas suivants afin de déterminer son mode :

- Si tous les flux traversant une interface sont analytiques, le mode de l'interface est analytique et le mode de propagation des flux est complètement et uniquement analytique. Les modèles mathématiques des files d'attente de cette interface sont alors « activés », sans calcul de taux de service équivalent, sans file d'attente virtuelle et sans simulation événementielle.
- Si tous les flux traversant une interface sont événementiels, le mode de l'interface est événementiel et le mode de propagation des flux est complètement et uniquement événementiel. Les modèles mathématiques des files d'attente de cette interface sont alors « désactivés ».
- Si une interface est traversée par au moins un flux analytique et au moins un flux événementiel, cette interface est en mode hybride.

Les files d'attente de cette interface en mode hybride, contenant uniquement des flux analytiques, seront analytiques.

En fait, les files d'attente de cette interface, contenant au moins un flux événementiel, seront soit hybrides soit événementielles.

- Soit une file d'attente ne contient que des flux événementiels auquel cas elle sera simulée en tant que file d'attente réelle mais avec un taux de service équivalent qui sera calculé à partir d'un modèle analytique agrégé.
- Soit une file d'attente contient des flux analytiques et des flux événementiels auquel cas elle sera simulée en tant que file d'attente réelle pour les flux analytiques et par une file d'attente virtuelle pour les flux événementiels, mais avec un taux de service équivalent qui sera calculé à partir d'un modèle analytique agrégé. Les pertes de cette file d'attente virtuelle sont réalisées suivant un tirage uniforme correspondant à la valeur de la probabilité de perte calculée par le modèle analytique agrégé.

Selon une quatrième étape 400, on fait se propager les différents flux à travers le réseau.

Les files d'attentes de toutes les interfaces sont traitées pour tous les flux :

- Les débits des flux analytiques sont propagés aux interfaces suivantes.
- Chaque événement de paquet est traité et propagé via la simulation événementielle (création d'un nouveau paquet d'une source, disparition d'un paquet arrivé à la destination, disparition d'un paquet perdu dans une file d'attente saturée, arrivée d'un paquet dans une file d'attente d'une interface, départ d'un paquet d'une interface vers un lien, etc).
- Les simulations évènementielles sont faites pour les files d'attente réelles ou pour des files d'attente virtuelles.

Selon une cinquième étape 500, à intervalle de temps régulier, on mesure le débit des flux analytiques et on effectue des statistiques sur les flux événementiels arrivant dans chaque file d'attente de chaque interface et on en déduit les taux moyens d'arrivée analytiques et événementiels.

Selon une sixième étape 600, on estime un paramètre de convergence de la simulation. Si la convergence n'est pas suffisante, on renouvelle les étapes 300 à 600 jusqu'à temps que cette convergence soit considérée comme suffisante.

On va maintenant décrire plus en détail la quatrième étape 400 en s'appuyant sur deux exemples d'interfaces fonctionnant en mode hybride.

Au cours de cette étape 400, pour chaque interface ayant un mode de fonctionnement hybride, un taux de service équivalent (TRFE) est calculé pour chaque file d'attente de l'interface recevant au moins un flux de données événementiel.

PRINCIPE GENERAL : Cas d'une pluralité de files d'attente gérées par une loi de service complexe.

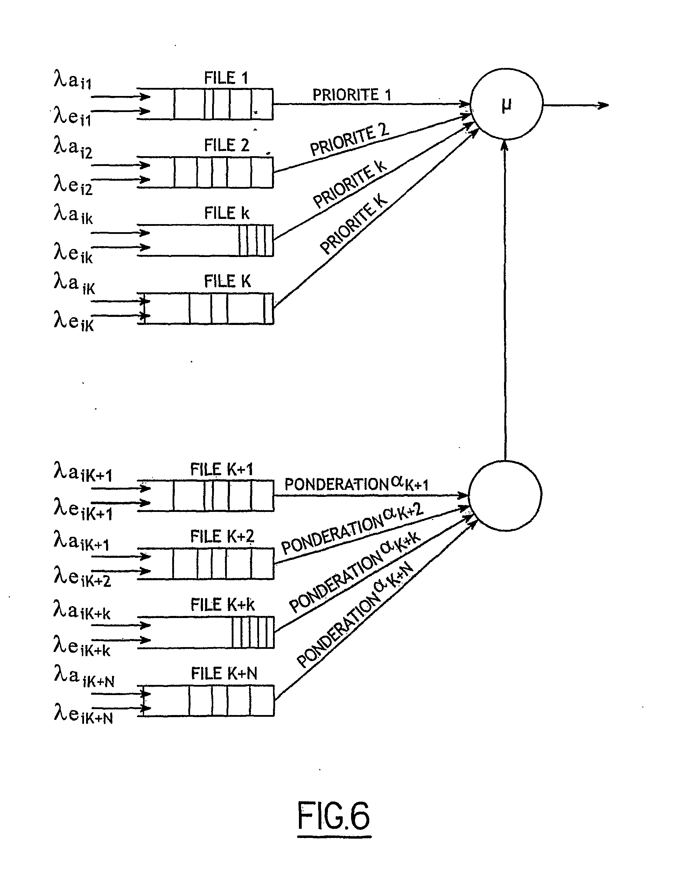

On s'intéresse au cas général d'une interface, telle que représentée sur la figure 6, l'interface comprenant un nombre quelconque de files d'attente, recevant une pluralité de flux analytiques et événementiels. L'interface met en oeuvre des combinaisons de disciplines d'ordonnancement de type priorité fixe et de type gestion équitable de bande passante avec pondération (WFQ ou « Wake Fair Queuing » en est un exemple).

On suppose que la discipline d'attente dans chaque file d'attente est de type premier arrivé premier servi.

Par ailleurs, on suppose que les paquets entrants des flux (analytiques et événementiels) arrivant dans chaque file d'attente suivent un processus de Poisson et une loi de service dépendant directement de la distribution des tailles des paquets ; cette distribution des tailles des paquets est de type Générale indépendante. On considère aussi une capacité infinie pour les files d'attentes.

D'autre part, les files d'attente sont structurées en deux bancs. Un premier banc contient K files d'attente gérées suivant un ordonnancement par priorités. Un deuxième banc contient N files d'attente gérées suivant un ordonnancement par gestion équitable de bande passante avec pondération.

On notera les files d'attente comme suit : 1,2 ... K, K+1, ..., K+N. Dans le premier banc, les paquets de la file d'attente 1 sont toujours traités avant ceux des files d'attente 2, 3, ... K. De même, les paquets de la file d'attente 2, si la file d'attente 1 est vide (aucun paquet présent), sont toujours traités avant ceux des files d'attente 3, 4, ... K. Il en est ainsi de toutes les files d'attente du premier banc, où l'indice indique non seulement le numéro de la file d'attente mais aussi son ordre de priorité. Les paquets des files d'attente K+1, K+2, ... K+N du deuxième banc sont traités lorsqu'il n'y a plus aucun paquet en attente dans les K premières files d'attente. Dans ce cas, les files d'attente K+1, K+2, ... K+N se partagent la bande passante suivant le type d'algorithme de gestion équitable de bande passante suivant la pondération $\alpha_i$ associée à chaque file d'attente k (pour k $\in$ {K+1,...K + N}). Ces pondérations sont telles que :

$$\sum_{k=K+1}^{K+N} \alpha_k = 1$$

Ce modèle couvre les cas particuliers suivants :

- K=1 et N=0 : l'interface comprend une seule file d'attente et les paquets sont traités dans l'ordre premier arrivé premier servi.
- K>1 et N=0 : l'interface comprend K files d'attente gérées suivant une discipline d'ordonnancement par priorités fixes.
- K=0 et N>1 : l'interface comprend N files d'attente gérées suivant une discipline d'ordonnancement par partage équitable avec pondération.

On notera $C_k$ la capacité de la file d'attente k (pour k $\in$ {1,....K+N}).

Le principe général qui va être développé détaille les calculs des paramètres de données d'évaluation analytique de restitution DEAR(k), de données d'évaluation analytique de la charge DEAC (k) et taux de service équivalent TRFE (k) associés à une file d'attente k quelconque de l'interface. Ces principes sont basés sur des modèles de files d'attente M/G/1 pour chaque file d'attente k d'une interface.

Considérons les notations suivantes :

$D_k$ est la moyenne des tailles des paquets (par exemple donné en bits) entrants des flux événementiels et/ou analytiques de la file d'attente k,

$\sigma D_k$ est le moment d'ordre 2 des tailles des paquets (par exemple donné en bits) des flux de paquets entrants dans la file d'attente k,

$\sigma D_{e_k}$ est le moment d'ordre 2 des tailles des paquets des flux. événementiels de paquets entrant dans la file d'attente k.

Une valeur de débit $\lambda_{e_k}$ est calculée pour chaque file d'attente k recevant au moins un flux événementiel. Cette valeur est calculée à partir de données événementielles de réception (DER) descriptives d'événements chronologiques de réception de paquets des flux événementiels. L'équation suivante illustre le principe de son calcul :

$$\lambda_{e_k} = \sum_i \lambda_{e_{ik}}$$

où $\lambda_{e_{ik}}$ est le débit, en nombre de paquets par unité de temps, du flux événementiel i entrant dans la file d'attente k.

De préférence, les valeurs $\lambda_{e_k}$ correspondent chacune à une valeur de débit moyen sur un intervalle de temps $\Delta t_p$ correspondant, à une itération courante du procédé d'évaluation. En pratique, chaque $\lambda_{e_k}$ peut être obtenu par dénombrement des événements chronologiques de réception survenant sur cet intervalle $\Delta t_p$ et par division du nombre obtenu par la durée de l'intervalle de temps $\Delta t_p$. Les valeurs $\lambda_{e_k}$ ainsi obtenues constituent les données d'évaluation statistique de réception (DESR) de chaque file d'attente k =1...K+N.

Puis, un calcul des données d'évaluation analytique de la charge (DEAC) est effectué pour l'intervalle de temps $\Delta t_p$ correspondant, tel que décrit ci-après, à une itération courante du procédé d'évaluation selon un mode de mise en oeuvre de l'invention.

Soit $\lambda_{a_k}$ le débit de paquets entrants des flux analytiques dans la file d'attente k (de préférence en paquets par seconde) :

$$\lambda_{a_k} = \sum_i \lambda_{a_{ik}}$$

où $\lambda_{a_{ik}}$ est le débit, en nombre de paquets par unité de temps, de paquets entrants de chaque flux analytique i de la file d'attente k.

Les valeurs $\lambda_{a_{ik}}$ constituent les données analytiques de réception (DAR) pour chaque file d'attente k=1...K+N.

En outre :

$$\mu_k = \frac{TME}{D_k}$$

$$\tau_k = \frac{1}{TME^2} \cdot \sigma D_k$$

$$\tau_{e_k} = \frac{1}{TME^2} \cdot \sigma D_{e_k}$$

où $\mu_k$ est le taux moyen de service des paquets des flux entrant dans la file d'attente k,

$\tau_k$ est le moment d'ordre 2 du temps de service des paquets des flux entrant dans file d'attente k,

et $\tau_{e_k}$ est le moment d'ordre 2 du temps de service des paquets des flux événementiels dans file d'attente k.

Ces paramètres $\mu_k$, $\tau_k$ et $\tau_{e_k}$ définissent la distribution générale de service des paquets dans la file d'attente k.

Soit $P_k$ la probabilité de perte de la file d'attente k. Celle-ci est calculée selon des formules classiques de type $M_k / G_k / 1 / C_k$ connues dans la littérature, où le flux total entrant dans la file d'attente k est supposé Poissoniens (M), la loi de service est supposée générale indépendante (G) et où la capacité de la file est $C_k$ (on pourra à cet égard se référer à l'ouvrage Introduction to Queueing Theory, second Edition, Robert B. Cooper, North Holland, 1981. ISBN: 0-444-00379-7, ou à The Single Server Queue, Jacob W. Cohen, North Holland, 1969. ISBN: 0-444-85452-5).

Cette probabilité $P_k$ est utilisée pour tous les flux analytiques des files analytiques de l'interface et aussi pour les flux analytiques et événementiels des files hybrides. Dans les files virtuelles, elle est utilisée pour le tirage uniforme de pertes de paquets de la simulation événementielle.

Introduisons les notations suivantes :

$$\rho_{e_k} = \frac{\lambda_{e_k}}{\mu_k}$$

$$\rho_{a_k} = \frac{\lambda_{a_k}}{\mu_k}$$

$$\rho_{a_{ik}} = \frac{\lambda_{a_{ik}}}{\mu_k}$$

$$\rho_k = \rho_{e_k} + \rho_{a_k}$$

$$\lambda_k = \lambda_{e_k} + \lambda_{a_k}$$

$$W_0 = \sum_{l=1}^{K+N} \frac{\lambda_l \cdot \tau_l}{2}$$

$$W_{e_0} = \sum_{l=1}^{K+N} \frac{\lambda_{e_l} \cdot \tau_{e_l}}{2}$$

$$R_k = \sum_{l=1}^{k-1} \rho_l$$

Soit $X_k$ la charge totale, en nombre de paquets, dans la file d'attente k, k $\in$ {1,...K}. Cette charge peut être décomposée en une charge $X_{a_k}$ induite par les flux analytiques et une charge $X_{e_k}$ induite par les flux événementiels, tel qu'illustré par la formule suivante :

$$X_k = X_{a_k} + X_{e_k}$$

Les calculs qui suivent sont décomposés en deux étapes principales.
La première étape traite du premier banc de files d'attente gérées par priorités fixes. La deuxième étape traite du deuxième banc de files d'attente gérées par gestion équitable de bande passante avec pondération.
Pour le premier banc de files d'attente, le taux maximal d'émission TME est partagé selon le procédé de gestion des files d'attentes par priorités, ordonnancées dans l'ordre 1, 2, 3, ..., K.

Pour les files d'attente k appartenant au premier banc, la charge totale est donnée par :

$$X_k = \rho_{a_k} + \rho_{e_k} + \frac{(\lambda_{a_k} + \lambda_{e_k}) \cdot W_0}{(1 - R_k) \cdot (1 - R_k - \rho_{a_k} - \rho_{e_k})}, \ k \in \{1, ... K\}$$

Si on considères une file d'attente k contenant des flux événementiels, la charge $X_{e_k}$ est donnée par:

$$X_{e_k} = \rho_{e_k} + \frac{\lambda_{e_k} \cdot W_0}{(1 - R_k) \cdot (1 - R_k - \rho_{a_k} - \rho_{e_k})}, \ k \in \{1, ... K\}$$

Pour la file d'attente k, contenant des flux analytiques, la charge $X_{a_k}$, est donnée par :

$$X_{a_k} = \rho_{a_k} + \frac{\lambda_{a_k} \cdot W_0}{(1 - R_k) \cdot (1 - R_k - \rho_{a_k} - \rho_{e_k})}, \ k \in \{1, ... K\}$$

En outre, la charge $X_{a_k}$ induite par chaque flux analytique i dans la file d'attente k peut être déterminée pour chaque flux analytique i selon l'équation suivante :

$$X_{a_{ik}} = \rho_{a_{ik}} + \frac{\lambda_{ia_k} \cdot W_0}{(1 - R_k) \cdot (1 - R_k - \rho_{a_k} - \rho_{e_k})}, \ k \in \{1, ... K\}$$

Les valeurs de charge $X_{e_k}$ et $X_{a_{ik}}$ constituent des données d'évaluation analytique de la charge (DEAC).
Ce calcul des données d'évaluation analytique de la charge est réalisé, selon le procédé connu d'évaluation analytique d'une file d'attente (on pourra à cet égard se reporter à la publication Modélisation Différentielle Du Trafic et Simulation Hybride Distribuée, Jean-Marie Garcia et al, Calculateurs Parallèles volume 13 numéro 6/2001 page 635 à 664) et correspond à une itération de la méthode de résolution numérique par point fixe utilisée dans ce procédé.
Un calcul des données d'évaluation analytique de restitution (DEAR) est ensuite réalisé suite au calcul des données d'évaluation analytique de la charge (DEAC). Ce calcul est réalisé pour chaque file d'attente k recevant au moins un flux analytique i selon les formules suivantes :

$$d_{a_{ik}} = \lambda_{a_{ik}}$$

Ces valeurs $d_{a_{ik}}$ constituent des données d'évaluation analytique de restitution (DEAR).
Un paramètre de taux de service équivalent TRFE(k) est calculé pour chaque file d'attente k, appartenant au premier banc et recevant au moins un flux événementiel. Ce paramètre TRFE(k) est une solution du système du second ordre suivant :

$$\mathrm{TRFE}(k)^2 \cdot (X_{e_k} - \lambda_{e_k} \cdot W_{e_0}) - \mathrm{TRFE}(k) \cdot \lambda_{e_k} \cdot (X_{e_k} + 1) + \lambda_{e_k}^2 = 0$$

Pour le deuxième banc de files d'attente (K+1, K+2, ..., K+N) le taux maximal d'émission (TME) est partagé selon le procédé de gestion équitable de bande passante avec pondération des files d'attentes.

Introduisons les calculs intermédiaires suivants :

$$A_k = \rho_k + \frac{\lambda_k \cdot W_0}{(1 - R_{K+1}) \cdot (1 - \rho_k - R_{K+1})}$$

$$X = \sum_{l=1}^{K+N} \rho_l + \frac{W_0 \cdot \sum_{l=1}^{K+N} \lambda_l}{(1 - \sum_{l=1}^{K+N} \rho_l)}$$

$$B_k = X - \sum_{l=1}^{K} X_l - A_k$$

$$\gamma_{i,l} = \frac{\rho_i}{\sum_{j=K+1, j \neq l}^{K+N} \rho_j}$$

$$Z_k = B_{k \oplus (N-1)} \cdot \gamma_{k, k \oplus (N-1)}$$

où l'opérateur $\oplus$ est défini par l'opération modulo suivante :

$$k \oplus j = K + 1 + \left[ \{k + j - (K+1)\} \bmod N \right]$$

Soit $X_k$ la charge totale, en nombre de paquets, dans les file d'attente k, $k \in \{K+1,...K+N\}$, du deuxième banc. Comme pour le premier banc, cette charge peut être décomposée en une charge $X_{a_k}$ induite par les flux analytiques et une charge $X_{e_k}$ induite par les flux événementiels, tel qu'illustré par la formule suivante :

$$X_k = X_{a_k} + X_{e_k} \, , \ k \in \{K+1,...K+N\}$$

Pour les files d'attente k appartenant au deuxième banc, la charge totale est donnée par :

$$X_k = \alpha_k \cdot [A_k - Z_k] + \sum_{j=K+1}^{K+N-2} \alpha_{k \oplus j} \cdot [B_{k \oplus j} \cdot \gamma_{k, k \oplus j} - Z_k] + Z_k \, ,$$

$k \in \{K+1,...K+N\}$

Pour les files d'attente k appartenant au deuxième banc, la charge analytique est donnée par :

$$X_{a_k} = \rho_{a_k} + \frac{\lambda_{a_k}}{\lambda_k} \cdot [X_k - \rho_k], \ k \in \{K+1,...K+N\}$$

Pour les files d'attente k appartenant au deuxième banc, la charge événementielle est donnée par :

$$X_{e_k} = \rho_{e_k} + \frac{\lambda_{e_k}}{\lambda_k} \cdot [X_k - \rho_k], \ k \in \{K+1,...K+N\}$$

Il faut considérer deux cas particuliers où N=2 et N=1, c'est à dire les cas où les files à gestion équitable de bande passante avec pondération du deuxième banc sont au nombre de deux ou de un.
Le cas N=2, donne une nouvelle équation différente pour la charge totale des files k, pour k ∈ {K+1,...K+N}, et l'équation de la charge analytique et événementielle restant identique :

$$X_k = (A_k + A_{k+1} - X) \cdot \alpha_k - A_{k+1} + X$$

$$X_{a_k} = \rho_{a_k} + \frac{\lambda_{a_k}}{\lambda_k} \cdot [X_k - \rho_k] - \left[ \rho_{a_k} - \frac{\lambda_{a_k}}{\lambda_k} \cdot \rho \right], \ k \in \{K+1, K+2\}$$

$$X_{e_k} = \rho_{e_k} + \frac{\lambda_{e_k}}{\lambda_k} \cdot [X_k - \rho_k] - \left[ \rho_{e_k} - \frac{\lambda_{e_k}}{\lambda_k} \cdot \rho \right], \ k \in \{K+1, K+2\}$$

Le cas N=1, donne une équation différente pour la charge totale des files k, pour k ∈ {K+1}, l'équation de la charge analytique et événementielle restant identique. En fait dans ce cas, il n'y a plus de gestion équitable de bande passante avec pondération entre les files d'attente du deuxième banc puisque ce deuxième banc se réduit à une seule file d'attente. Dans ce cas la file d'attente K+1, est vue comme une file prioritaire d'indice K+1 :

$$X_{K+1} = \rho_{a_{K+1}} + \rho_{e_{K+1}} + \frac{(\lambda_a + \lambda_{e_{K+1}}) \cdot W_0}{(1 - R_{K+1}) \cdot (1 - R_{K+1} - \rho_{a_{K+1}} - \rho_{e_{K+1}})}$$

Si on considère la file d'attente K+1 composée des flux événementiels, la charge $X_{e_k}$ est donnée par:

$$X_{e_{K+1}} = \rho_{e_{K+1}} + \frac{\lambda_{e_{K+1}} \cdot W_0}{(1 - R_{K+1}) \cdot (1 - R_{K+1} - \rho_{a_{K+1}} - \rho_{e_{K+1}})}$$

Pour la file d'attente K+1, composée de flux analytiques, la charge $X_{a_k}$ est donnée par:

$$X_{aK+1} = \rho_{aK+1} + \frac{\lambda_{aK+1} \cdot W_0}{(1-R_{K+1}) \cdot (1-R_{K+1} - \rho_{aK+1} - \rho_{eK+1})}$$

En outre, la charge $X_{a_{ik+1}}$ induite par chaque flux analytique i dans la file d'attente K+1 peut être déterminée pour chaque flux analytique i selon l'équation suivante :

$$X_{aiK+1} = \rho_{aiK+1} + \frac{\lambda_{aiK+1} \cdot W_0}{(1-R_{K+1}) \cdot (1-R_{K+1} - \rho_{aK+1} - \rho_{eK+1})}$$

Pour tous les cas précédemment décrits pour le deuxième banc de files d'attente k, $k \in \{K+1,...K+N\}$, ordonnancées par gestion équitable de bande passante avec pondération, et pour les files d'attente k, traversées par au moins par un flux événementiel de taux $\lambda_{e_k}$, un paramètre de taux de service équivalent TRFE(k) est calculé par la résolution du système du second ordre suivant :

$$TRFE(k)^2 \cdot (X_{e_k} - \lambda_{e_k} \cdot W_{e_0}) - TRFE(k) \cdot \lambda_{e_k} \cdot (X_{e_k} + 1) + \lambda_{e_k}^2 = 0$$

Lors de la mise en oeuvre du procédé, le calcul des données d'évaluation statistique de réception DESR, le calcul des donnée d'évaluation analytique de la charge DEAC, le calcul des données d'évaluation analytique de la restitution DEAR et le calcul des paramètres TRFE(k) est répété pour chaque itération de l'étape 400 d'évaluation du procédé.

EXEMPLE 1 :

Dans le premier exemple et le deuxième exemple de mise en oeuvre du procédé d'évaluation de l'invention le troisième flux 43 et le quatrième flux 44 du port 4 constituent chacun un flux événementiel tandis que le premier flux 41 et le deuxième flux 42 constituent chacun un flux analytique.

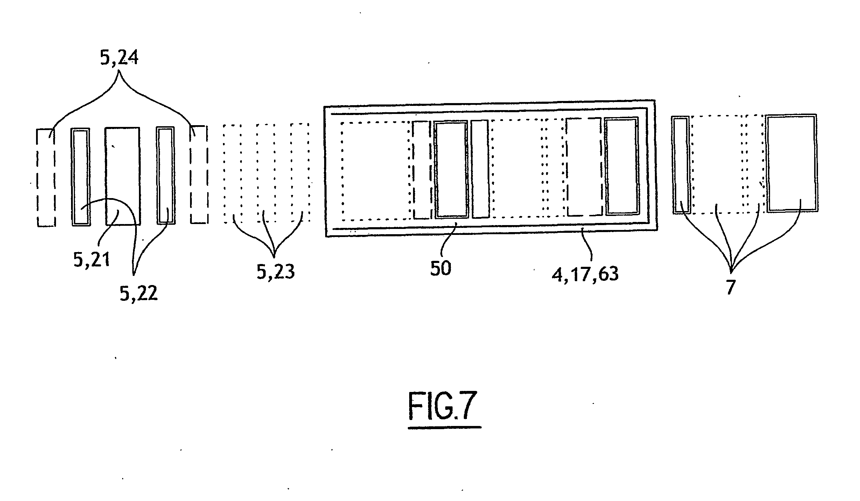

La figure 7 représente le port 4 du dispositif 16 matériel selon le premier exemple de mise en oeuvre du procédé d'évaluation de l'invention. La figure 6 représente le principe d'évaluation hybride par superposition tel que réalisé dans le premier exemple de mise en oeuvre du procédé d'évaluation de l'invention.
Ce premier exemple est une application particulière du modèle générique dans le cas où K=1 et N=0.
Dans cet exemple la discipline d'attente dans la file d'attente est de type premier arrivé premier servi. On suppose par ailleurs que les paquets 5 entrants des flux événementiels et analytiques arrivent suivant un processus de Poisson et que la taille des paquets de ces flux (analytiques et événementiels) suit une distribution Générale Indépendante de moyenne D et de moment d'ordre 2 σD. On notera σDe le moment d'ordre 2 du flux agrégé de paquets correspondant aux flux événementiels 43 et 44.
Dans ce premier exemple, une seule valeur $\lambda e$ de débit entrant est calculée pour l'ensemble des flux 43, 44 événementiels. Cette valeur est calculée et mémorisée à partir de données événementielles de réception DER descriptives d'événements chronologiques de réception de paquets 23, 24 des flux 43, 44 événementiels. L'équation suivante précise ce calcul :

$$\lambda_e = \lambda_{e43} + \lambda_{e44}$$

où $\lambda_{e_{43}}$ et $\lambda_{e_{44}}$ sont les débits, en nombre de paquets par unité de temps, de parquets entrants des flux événementiels 43 et 44, respectivement.

De préférence, la valeur $\lambda_e$ correspond à une valeur de débit moyen sur un intervalle de temps $\Delta t_p$ correspondant, tel que décrit ci-après, à une itération courante du procédé d'évaluation de l'invention. En pratique, $\lambda e$ peut être obtenu par dénombrement des événements chronologiques de réception survenant sur cet intervalle $\Delta t_p$ et par division du nombre obtenu par la durée de l'intervalle de temps $\Delta t_p$. Dans cet exemple la valeur $\lambda e$ ainsi calculée constitue les données d'évaluation statistique de réception DESR.

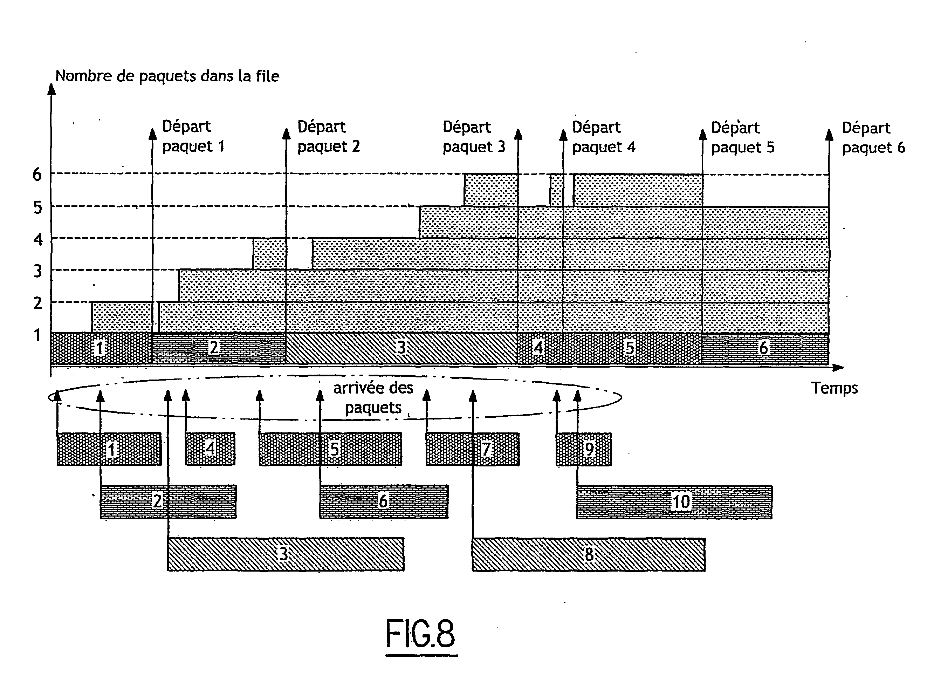

A titre illustratif, la figure 8 est un graphique représentant, en ordonnées, l'évolution dans le temps, représenté en abscisses, de la charge, en nombre de paquets, d'une file d'attente virtuelle, telle que décrite ci-après, de type premier arrivé premier servi de paquets en fonction d'événements chronologiques de réceptions et d'événements chronologiques de restitutions de paquets. Chaque événement chronologique de réception d'un paquet est représenté par une flèche dont la position en abscisses indique la date de réception du paquet.

Suite au calcul des données d'évaluation statistique de réception DESR, un calcul des données d'évaluation analytique de la charge DEAC est effectué pour l'intervalle de temps $\Delta t_p$ correspondant, tel que décrit ci-après, à une itération courante du procédé d'évaluation de l'invention. Dans cet exemple, ce calcul est réalisé selon un modèle analytique de type M/G/1 de la file d'attente.

Soit $\lambda$ le débit total de paquets entrants des flux événementiels et des flux analytiques dans la mémoire tampon, $\lambda a$ le débit de paquets entrants total des flux analytiques de la file d'attente :

$$\lambda = \sum_i \lambda a_i + \sum_j \lambda e_j ,$$

$$\lambda a = \sum_i \lambda a_i ,$$

où $\lambda a_i$ est le débit, en nombre de paquets par unité de temps, de paquets entrants de chaque flux analytique i=41,42 de la file d'attente.

Dans cet exemple, ces valeurs $\lambda a_j$ constituent les données analytiques de réception DAR.

Soit $\mu$ le taux moyen de restitution de paquets des flux de paquets entrants dans la mémoire tampon (la moyenne du temps de traitement d'un paquet étant $1/\mu$) :

$$\mu = \frac{TME}{\mu}$$

On note :

$$\rho = \frac{\lambda}{\mu}$$

$$\rho a_i = \frac{\lambda a_i}{\mu}$$

$$\rho_{e_j} = \frac{\lambda_{e_j}}{\mu}$$

$$\rho a = \sum_i \rho a_i \ ,$$

et

$$\rho e = \sum_j \rho e_j \ .$$

En outre :

$$\tau_e = \frac{\sigma De}{TME^2}$$

$$\tau = \frac{\sigma D}{TME^2}$$

$\tau$ est le moment d'ordre 2 du temps de service des paquets des flux (analytiques et événementiels) entrant dans file d'attente. $\tau_e$ est le moment d'ordre 2 du temps de service des paquets des flux événementiels 43 et 44 entrant dans file d'attente.

En appliquant les calculs génériques décrits précédemment à cet exemple, on obtient :

$$W_0 = \frac{\lambda \cdot \tau}{2}$$

$$We_0 = \frac{\lambda_e \cdot \tau_e}{2}$$

$$R = 0$$

Dans cet exemple, la charge totale de la mémoire tampon est donnée par:

$$X = \rho + \frac{\lambda^2 \cdot \tau}{2 \cdot (1 - \rho)}$$

Cette charge peut être décomposée en une charge Xa induite par les flux analytiques et une charge Xe induite par les flux événementiels, tel qu'illustré par la formule suivante :

$$X = X_a + X_e$$

La charge Xe induite par les flux événementiels dans la file d'attente peut être déterminée par la formule suivante :

$$Xe = \rho e + \lambda e \cdot \frac{\lambda \cdot \tau}{2 \cdot (1 - \rho)}$$

En outre, la charge $Xa_i$ induite dans la file d'attente est déterminée pour chaque flux analytique i selon l'équation suivante :

$$Xa_i = \rho a_i + \lambda a_i \cdot \frac{\lambda \cdot \tau}{2 \cdot (1 - \rho)}$$

Ainsi, une valeur $Xa_1$ représentative de la charge induite par le premier flux 41 dans la file d'attente, une valeur $Xa_2$ représentative de la charge induite par le deuxième flux 42 dans la file d'attente, ainsi qu'une valeur Xe représentative de la charge induite par les flux événementiels 43, 44 dans la file d'attente sont calculées et mémorisées pour le port 4.

Dans ce premier exemple, les valeurs $Xa_1$, $Xa_2$, et Xe constituent des données d'évaluation analytique de la charge DEAC. En pratique, le calcul des ces valeurs est, dans cet exemple, réalisé selon le procédé connu d'évaluation analytique d'une file d'attente (cf. «Modélisation Différentielle Du Trafic et Simulation Hybride Distribuée» Jean-Marie Garcia et al, Calculateurs Parallèles volume 18 numéro 3/81 pages 635 à 664) et correspond à une itération d'une méthode de résolution numérique par points fixe utilisée dans ce procédé.

Un calcul de données d'évaluation analytique de restitution DEAR peut être ensuite réalisé suite au calcul des données d'évaluation analytique de la charge DEAC. Ce calcul est réalisé selon les formules suivantes :

$$da_i = \lambda a_i$$

où $da_i$ est le débit de paquets 7 sortants issus du flux analytique i.

Ainsi, une valeur $da_1$ représentative du débit de paquets 7 sortants issus du premier flux 41 ainsi qu'une valeur $da_2$ représentative du débit de paquets 7 sortants issus du deuxième flux 42 sont calculées et mémorisées pour le port 4. Ces valeurs $da_1$ et $da_2$ constituent des données d'évaluation analytique de la restitution DEAR.

Dans cet exemple, suite au calcul des données d'évaluation analytique de la charge, un paramètre TRFE de taux de restitution, par la file d'attente, de paquets 7 sortants issus du troisième flux 43 et du quatrième flux 44 est calculé en résolvant le système de deuxième ordre suivant :

$$TRFE^2 \cdot \left( Xe - \frac{\lambda e \cdot \tau_e}{2} \right) - TRFE \cdot \lambda e \left( Xe + 1 \right) + \lambda e^2 = 0$$

Ce paramètre TRFE permet de calculer, dans une sous étape d'évaluation de la transmission des flux événementiels tel que décrit ci-après, des dates d'événements chronologiques de restitution

EXEMPLE 2 :

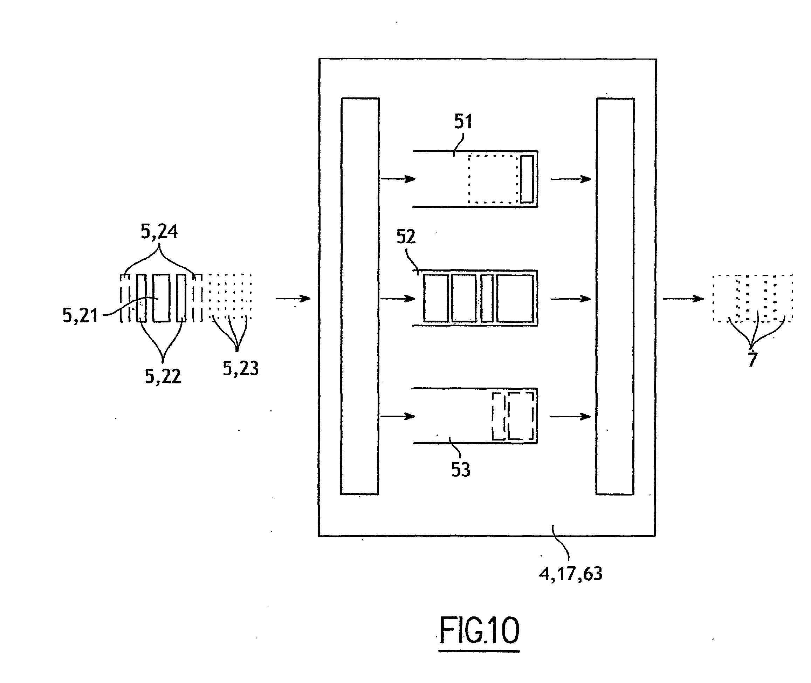

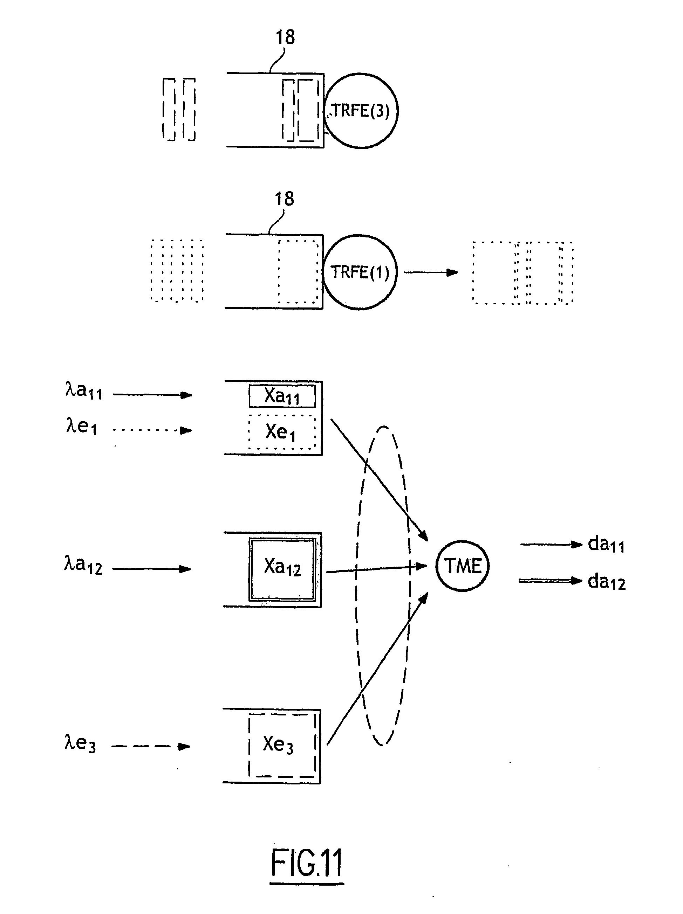

La figure 10 représente le port 4 du dispositif 16 matériel dans le deuxième exemple de mise en oeuvre du procédé d'évaluation de l'invention. La figure 11 représente le principe d'évaluation hybride par superposition tel que réalisé dans le deuxième exemple de mise en oeuvre du procédé d'évaluation de l'invention.

Dans cet exemple, la discipline d'attente est de type premier arrivé premier servi. Par ailleurs, on suppose dans ce deuxième exemple que les paquets entrants des flux (analytiques et événementiels) arrivant dans chaque mémoire tampon suivent un processus de Poisson et une loi de service dépendant directement de la distribution des tailles des paquets ; dans cet exemple cette distribution des tailles des paquets est de type Générale indépendante. Aussi, on considère une capacité infinie pour les files d'attentes.

D'autre part, les mémoires tampon sont gérées suivant un ordonnancement par priorités. Dans un tel type d'ordonnancement, les paquets de la file d'attente 1 sont toujours traités avant ceux des files d'attente 2, 3, ... K, où K est le nombre de files d'attente dans le port. De même, les paquets de la mémoire tampon 2, si la mémoire tampon 1 est vide (aucun paquets présent), sont toujours traités avant ceux des mémoires tampon 3, 4, ... K. Il en est ainsi de toutes les mémoires tampon, où l'indice indique non seulement le numéro de la file d'attente mais aussi son ordre de priorité. Cet exemple illustre le calcul de chaque paramètre TRFE(k) associé à une file d'attente k du port.

Cet exemple est une application particulière du modèle générique dans le cas où K=3 et N=0.

Considérons les notations suivantes :

$D_k$ : la moyenne des tailles des paquets (par exemple donné en bits) entrants des flux événementiels et/ou analytiques de la file d'attente k,

$\sigma D_k$ : le moment d'ordre 2 des tailles des paquets (par exemple donné en bits) des flux de paquets entrants de la file d'attente k,

$\sigma De_k$ : le moment d'ordre 2 des tailles des paquets des flux événementiels de paquets entrants dans la file d'attente k.

Dans ce cas particulier le taux maximal d'émission TME est partagé selon le procédé de gestion des files d'attentes par priorité, ordonnancées dans l'ordre 1, 2, 3, ..., K.

Dans ce deuxième exemple, une valeur $\lambda e_k$ est calculée pour chaque file d'attente recevant au moins un flux événementiel. Cette valeur est calculée à partir de données événementielles de réception DER descriptives d'événements chronologiques de réception de paquets des flux événementiels. L'équation suivante illustre le principe de son calcul :

$$\lambda e_k = \sum_j \lambda e_{jk}$$

où $\lambda e_{jk}$ est le débit, en nombre de paquets par unité de temps, de paquets entrants de chaque flux événementiel j de la file d'attente k.

Ainsi, une valeur $\lambda e_1$ de débit entrant du troisième flux 43 dans la première file d'attente 51 et une valeur $\lambda e_3$ de débit entrant du quatrième flux 44 dans la troisième file d'attente 53 sont obtenues.

De préférence, ces valeur $\lambda e_k$ correspondent chacune à une valeur de débit moyen sur un intervalle de temps $\Delta t_p$ correspondant, tel que décrit ci-après, à une itération courante du procédé d'évaluation de l'invention. En pratique, chaque $\lambda e_k$ peut être obtenu par dénombrement des événements chronologiques de réception survenant sur cet intervalle $\Delta t_p$ et par division du nombre obtenu par la durée de l'intervalle de temps $\Delta t_p$. Dans ce deuxième exemple, les valeurs $\lambda e_1$ et $\lambda e_3$ ainsi obtenues constituent les données d'évaluation statistique de réception DESR.

Suite au calcul des données d'évaluation statistique de réception DESR, un calcul des données d'évaluation analytique de la charge DEAC est effectué pour l'intervalle de temps $\Delta t_p$ correspondant, tel que décrit ci-après, à une itération courante du procédé d'évaluation de l'invention. Dans cet exemple, ce calcul est réalisé selon un modèle analytique de type M/G/1 pour chaque file d'attente k.

Soit $\lambda a_k$ le débit de paquets entrants des flux analytiques dans la file d'attente k (de préférence en paquets par seconde) :

$$\lambda a_k = \sum_i \lambda a_{ik}$$

où $\lambda a_{ik}$ est le débit, en nombre de paquets par unité de temps, de paquets entrants de chaque flux analytique i de la file d'attente k.

Dans cet exemple, ces valeurs $\lambda a_{ik}$ constituent les données analytiques de réception DAR.

En outre :

$$\mu_k = \frac{\text{TME}}{D_k}$$

et

$$\tau_k = \frac{\sigma D_k}{\text{TME}^2}$$

$$\tau e_k = \frac{\sigma De_k}{TME^2}$$

où $\mu_k$ est le taux moyen de service des paquets des flux entrants dans la file d'attente k, $\tau_k$ est le moment d'ordre 2 du temps de service des paquets des flux entrants dans file d'attente k et $\tau e_k$ est le moment d'ordre 2 du temps de service des paquets des flux événementiels entrants dans file d'attente k.

Pour chaque file d'attente k on calcule les quantités suivantes :

$$\rho e_k = \frac{\lambda e_k}{\mu_k} \quad \text{et} \quad \rho a_k = \frac{\lambda a_k}{\mu_k},$$

$$R_k = \sum_{l=1}^{k-1} \rho e_l + \rho a_l.$$

On calcule de plus les quantités suivantes :

$$W_0 = \sum_{l=1}^{K} \frac{(\lambda a_l + \lambda e_l) \cdot \tau_l}{2}$$

$$We_0 = \sum_{l=1}^{K} \frac{\lambda e_l \tau e_l}{2}$$

Soit $X_k$ la charge totale, en nombre de paquets, dans la file d'attente k. Cette charge peut être décomposée en une charge $Xa_k$ induite par les flux analytiques et une charge $Xe_k$ induite par les flux événementiels, tel qu'illustré par la formule suivante :

$$X_k = Xa_k + Xe_k$$

Dans cet exemple, la charge totale de la mémoire tampon k est donnée par:

$$X_k = \rho a_k + \rho e_k + \frac{(\lambda a_k + \lambda e_k) * Wo}{(1 - R_k)(1 - R_k - \rho a_k - \rho e_k)}$$

Si on considère une mémoire tampon k composée d'au moins un flux événementiel, la charge $Xe_k$ est donnée par:

$$Xe_k = \rho e_k + \frac{\lambda e_k \cdot Wo}{(1 - R_k)(1 - R_k - \rho a_k - \rho e_k)}$$

En outre, la charge $Xa_{ik}$ induite par chaque flux analytique i dans la file d'attente k peut être déterminée pour chaque flux analytique i selon l'équation suivante :

$$Xa_{ik} = \rho a_{ik} + \frac{\lambda a_{ik} \cdot Wo}{(1 - R_k)(1 - R_k - \rho a_k - \rho e_k)}$$

Ainsi, une charge analytique $Xa_{11}$ représentative de la charge induite par le premier flux 41 dans la première file d'attente 51 ainsi qu'une charge analytique $Xa_{12}$ représentative de la charge induite par le troisième flux 43 dans la première file d'attente 51 sont calculées. En outre, une charge événementielle $Xe_2$ représentative de la charge induite par le deuxième flux 42 dans la deuxième file d'attente 52 et une charge événementielle $Xe_3$ représentative de la charge induite par le quatrième flux 44 dans la troisième file d'attente 53 sont calculées. Ces valeurs de charge $Xe_1$, $Xa_{11}$, $Xa_{12}$ et $Xe_3$ constituent des données d'évaluation analytique de la charge DEAC. A noter que dans cet exemple, les valeurs de $Xe_2$ et $Xa_{13}$ sont nulles puisque aucun flux événementiel ne correspond à la deuxième file d'attente 52 et qu'aucun flux analytique correspond à la troisième file d'attente 53.

Ce calcul des données d'évaluation analytique de la charge est réalisé, dans ce deuxième exemple, selon le procédé connu d'évaluation analytique d'une file d'attente (cf. «Modélisation Différentielle Du Trafic et Simulation Hybride Distribuée» Jean-Marie Garcia et al, Calculateurs Parallèles volume 13 numéro 6/2001 page 635 à 664) et correspond à une itération de la méthode de résolution numérique par point fixe utilisée dans ce procédé.

Un calcul des données d'évaluation analytique de restitution DEAR est ensuite réalisé suite au calcul des données d'évaluation analytique de la charge DEAC. Ce calcul est réalisé pour chaque file d'attente k recevant au moins un flux analytique i selon les formules suivantes :

$$da_{ik} = \lambda a_{ik}$$

Ainsi, une valeur $da_{11}$ représentative du débit de paquets 7 sortants issus du premier flux 41 dans la première file d'attente 51 est calculée ainsi qu'une valeur $da_{12}$ représentative du débit de paquets 7 sortants issus du deuxième flux 42 sont calculés et mémorisés pour le port 4 dans cet exemple. Ces valeurs $da_{11}$ et $da_{12}$ constituent des données d'évaluation analytique de la restitution DEAR.

Dans cet exemple, un paramètre TRFE(k) est calculé pour chaque file d'attente k recevant au moins un flux événementiel, c'est à dire pour les files d'attentes 51 et 53. Ainsi, un paramètre TRFE(1) est calculé pour la première file d'attente 51 et un paramètre TRFE(3) est calculé pour la troisième file d'attente 53. Ces paramètres TRFE(k) sont des solutions du système du $2^{nd}$ ordre suivant :

$$TRFE(k)^2 \cdot \left(Xe_k - \lambda e_k We_o\right) - TRFE(k) \cdot \lambda e_k \left(Xe_k + 1\right) + \lambda e_k^2 = 0$$

Dans ce deuxième exemple de mise en oeuvre, le calcul des données d'évaluation statistique de réception DESR, le calcul des données d'évaluation analytique de la charge DEAC, le calcul des données d'évaluation analytique de la restitution DEAR et le calcul des paramètres TRFE(1) et TRFE(3) est répété pour chaque itération de l'étape d'évaluation, décrite ci-après, du procédé d'évaluation de l'invention.

Les paramètres TRFE(1) et TRFE(3) sont ainsi calculés et mémorisés en vue de l'évaluation de la transmission des flux événementiels de l'itération subséquente de l'étape d'évaluation, telle que décrite ci-après.

**Revendications**

1. Procédé d'évaluation numérique d'un réseau de transmission de données comprenant une pluralité de noeuds (1) et des liaisons (2) de transmission de données s'étendant entre les noeuds (1), chaque noeud (1) comprenant au moins une interface d'entrée ou de sortie (11, 12) comprenant une pluralité de files d'attente, chaque file d'attente étant apte à recevoir des données sous la forme de flux analytiques ou événementiels, les flux de données étant répartis dans les files d'attente en fonction de classes de service associées au flux,
le procédé comprenant des étapes consistant à :

   - identifier des interfaces ayant un mode de fonctionnement hybride recevant chacune au moins un flux de données événementiel et au moins un flux de données analytique,
   - pour chaque interface ayant un mode de fonctionnement hybride, déterminer pour les flux de données événementiels d'une classe de service (k) donnée reçus par l'interface, une file d'attente équivalente virtuelle associée à la classe de service (k) donnée, la file d'attente équivalente virtuelle ayant un taux de service équivalent (TRFE(k)), en vue d'évaluer le réseau de transmission de données en associant à l'interface la file d'attente équivalente virtuelle recevant les flux de données événementiels de la classe de service (k) donnée.

2. Procédé selon la revendication 1, comprenant une étape préalable consistant à déterminer, pour une pluralité de flux de données incluant des flux de données analytiques et des flux de données événementiels, auxquels sont associées des classes de service (k), des chemins de routage, chaque chemin passant par une pluralité d'interfaces de noeuds.

3. Procédé selon la revendication 1 ou 2, dans lequel l'étape de détermination d'une file d'attente équivalente virtuelle comprend des sous-étapes consistant à :

   - convertir les flux de données événementiels d'une classe de service (k) reçus par l'interface en un flux analytique équivalent ($\lambda_{e_k}$), et
   - déterminer le taux de service équivalent (TRFE(k)) en fonction d'une loi de service ($\Gamma$) régissant les flux de données reçus par l'interface en prenant en compte le flux de données analytique équivalent.

4. Procédé selon la revendication 3, dans lequel la loi de service ($\Gamma$) prend en compte les flux de données analytiques et les flux de données analytiques équivalents de différentes classes de service (k = 1...K) répartis dans les différentes files d'attente de l'interface (11, 12).

5. Procédé selon l'une des revendications 3 ou 4, dans lequel l'étape de détermination d'un taux de service équivalent comprend une sous-étape consistant à :

- agréger le flux analytique équivalent ($\lambda_{e_k}$) avec des flux analytiques ($\lambda_{a_k}$) reçus par une même file d'attente (k) que les flux de données événementiels,
- résoudre un système d'équations analytiques agrégé dépendant de la loi de service ($\Gamma$) en fonction des flux analytiques agrégés.

6. Procédé selon la revendication 5, dans lequel la résolution du système d'équation agrégé conduit à l'obtention d'un nombre de paquets de données agrégés dans une même file d'attente (k).

7. Procédé selon l'une des revendications 5 ou 6, dans lequel le système d'équation prend en compte les paramètres suivants :

- une valeur de taille moyenne de paquets de données,
- une valeur de variance de taille de paquet de données,
- une valeur moyenne de débits d'arrivée de paquets de données pour chaque flux, et/ou
- un ordonnancement appliqué aux files d'attente de l'interface.

8. Procédé selon l'une des revendications qui précèdent, dans lequel l'étape de détermination d'un taux de service équivalent (TRFE(k)) prend en compte les paramètres suivants :

- une moyenne de taille de paquets ($D_k$) des flux reçus par la file d'attente (k) de l'interface,
- des moments d'ordre 2 de taille de paquets ($\sigma D_k$, $\sigma D_{e_k}$) des flux reçus par la file d'attente (k),
- un taux de service global (TME) associé à l'interface,
- une loi de service ($\Gamma$) associée à l'interface, et/ou
- un paramètre de capacité ($C_k$) d'une file d'attente de l'interface.

9. Procédé selon l'une quelconque des revendications précédentes, dans lequel l'interface est décomposée en un premier banc contenant K files d'attente gérées suivant un ordonnancement par priorités, et un deuxième banc contenant N files d'attente gérées suivant un ordonnancement par gestion équitable de bande passante avec pondération ($\sigma_k$).

10. Procédé selon la revendication 9, comprenant les étapes de :

- résolution du deuxième banc, consistant à déterminer, pour chaque file d'attente (k, $k \in \{1,...N\}$) du premier banc, des valeurs de charges associées aux flux événementielle ($X_{e_k}$) et analytiques ($X_{a_{ik}}$) reçus dans la file, en assimilant le deuxième banc à une K+1 ième file d'attente du premier banc, puis
- résolution du premier banc, consistant à déterminer, pour chaque file d'attente (k, $k \in \{N+1,...N+K\}$) du deuxième banc, des valeurs de charges associées aux flux événementielle ($X_{e_k}$) et analytiques ($X_{a_{ik}}$) reçus dans la file.

11. Procédé selon la revendication 9 ou 10, dans lequel l'étape de résolution du deuxième banc comprend les étapes consistant à :

- calculer une charge globale des N files d'attente du deuxième banc,
- pour chaque file d'attente k du deuxième banc, déterminer une charge élémentaire minimale et une charge restante maximale, en considérant que le coefficient de pondération de la file k est maximal et qu'un coefficient de pondération des autres files différentes de k du deuxième banc est minimal, et répartir la charge restante des files d'attente différentes de k au prorata d'un taux d'utilisation $\rho_k$ de ces files d'attente,
- à partir de la charge globale, de la charge minimale et de la charge maximale pour chaque file d'attente du deuxième banc, effectuer une interpolation multilinéaire entre les 2*N valeurs minimales-et maximales avec les valeurs connues du taux de pondération $\alpha_k$ des files d'attente k.

12. Procédé selon l'une des revendications qui précèdent, dans lequel on renouvelle l'étape de détermination d'un taux de service équivalent (TRFE (k)) à intervalle de temps régulier ($\Delta t_p$).

**13.** Dispositif d'évaluation numérique d'un réseau de transmission de données, le dispositif comprenant une unité de traitement adaptée pour exécuter les étapes du procédé selon l'une des revendications 1 à 12.

**Claims**

**1.** A method for the digital evaluation of a data transmission network comprising a plurality of nodes (1) and data transmission links (2) extending between the nodes (1), each node (1) including at least one input or output interface (11, 12) with a plurality of queues, each queue being adapted for receiving data in the form of an analytical or event-based data stream, the data streams being divided between the queues as a function of classes of service associated with the stream, the method including steps of:

- identifying interfaces with a hybrid operating mode, each receiving at least one event-based data stream and at least one analytical data stream,
- for each interface with a hybrid operating mode, determining, for the event-based data stream of a given class of service (k) received by the interface, a virtual equivalent queue associated with the given class of service (k), the virtual equivalent queue having an equivalent service rate (TRFE(k)), with a view to evaluating the data transmission network by associating, with the interface, the virtual equivalent queue receiving the event-based data stream with the given class of service (k).

**2.** The method according to claim 1, including a preliminary step of determining, for a plurality of data streams including analytical data streams and event-based data streams, with which are associated classes of service (k), routing paths, each path passing through a multiplicity of node interfaces.

**3.** The method according to claim 1 or 2, wherein the step of determining a virtual equivalent queue includes sub-steps of:

- converting the event-based data stream with a class of service (k) received by the interface into an equivalent analytical stream ($\lambda_{ek}$), and
- determining the equivalent service rate (TRFE(k)) as a function of a service law ($\Gamma$) governing the data stream received by the interface taking into account the equivalent analytical data stream.

**4.** The method according to claim 3, wherein the service law ($\Gamma$) takes into account the analytical data streams and the equivalent analytical data streams of different classes of service (k = 1...K) divided between the different queues at the interface (11, 12).

**5.** The method according to either of claims 3 or 4, wherein the step for determining an equivalent service rate includes a sub-step of:

- aggregating the equivalent analytical stream ($\lambda_{ek}$) with analytical streams ($\lambda_{ak}$) received by a same queue (k) as the event-based data stream,
- solving a system of aggregated analytical equations dependent upon the service law ($\Gamma$), as a function of the aggregated analytical data streams.

**6.** The method according to claim 5, wherein solution of the aggregated equation system leads to the acquisition of a number of data packets aggregated in a same queue (k).

**7.** The method according to either of claims 5 or 6, wherein the equation system takes into account the following parameters:

- a value for the mean size of data packets,
- a value for the size variance of data packets,
- a mean value for the arrival rate of data packets for each data stream, and/or
- a scheduling applied to the queues of the interface.

**8.** The method according to any of the previous claims, wherein the step of determining an equivalent service rate (TRFE(k)) takes into account the following parameters:

- a mean packet size (Dk) of the data streams received by queue (k) of the interface,

- second-order moments of packet size ($\sigma D_k$, $\sigma D_{ek}$) of the data streams received by queue (k),
- an overall service rate (TME) associated with the interface,
- a service law ($\Gamma$) associated with the interface, and/or
- a parameter for the capacity ($C_k$) of a queue at the interface.

9. The method according to any one of the previous claims, wherein the interface is broken down into a first bank containing K queues managed according to a scheduling by priorities, and a second bank containing N queues managed according to a scheduling by equitable management of bandwidth with weighting ($\alpha_k$).

10. The method according to claim 9, including the steps of :

- solving the second bank, consisting of determining, for each queue (k, $k \in \{1, ...N\}$) of the first bank, load values associated with the event-based ($X_{ek}$) data streams and analytical ($X_{aik}$) data streams received in the queue, by treating the second bank as a K+1th queue of the first bank, then
- solving the first bank, consisting of determining, for each queue (k, $k \in \{N+i, ...N+K\}$) of the second bank, load values associated with the event-based data streams ($X_{ek}$) and analytical data streams ($X_{aik}$) received in the queue.

11. The method according to claim 9 or 10, wherein the step of solving the second bank includes steps of:

- calculating an overall load of the N queues of the second bank,
- for each queue k of the second bank, determining a minimum elementary load and a maximum remaining load, by considering that the weighting coefficient of file k is maximum, and that a weighting coefficient of the queues other than k of the second bank is minimum, and then dividing the remaining load of the queues other than k in proportion to a rate of use $\rho_k$ of these queues,
- from the overall load, the minimum load, and the maximum load for each queue of the second bank, performing a multilinear interpolation between the 2*N minimum and maximum values with the known values of the weighting coefficient $\alpha_k$ of queues k.

12. The method according to any of the preceding claims, wherein the step of determining an equivalent service rate (TRFE (k)) is repeated at regular time intervals ($\Delta t_p$).

13. A device for the digital evaluation of a data transmission network, the device including a processing unit adapted for executing the steps of the method according to any of claims 1 to 12.

**Patentansprüche**

1. Verfahren zur digitalen Bewertung eines Datenübertragungsnetzes, welches eine Vielzahl von Knoten (1) und sich zwischen den Knoten (1) erstreckende Datenübertragungsverbindungen (2) umfasst, wobei jeder Knoten (1) wenigstens eine Eingangs- oder Ausgangsschnittstelle (11, 12) umfasst, die eine Vielzahl von Warteschlangen umfasst, wobei jede Warteschlange ausgelegt ist, um Daten in der Form von analytischen Ströme oder von Ereignisströmen zu empfangen, wobei die Datenströme in den Warteschlangen in Abhängigkeit von dem Strom zugeordneten Dienstklassen eingeteilt werden, wobei das Verfahren Schritte umfasst, die darin bestehen:

- Schnittstellen zu identifizieren, die einen hybriden Betriebsmodus aufweisen, von denen jede wenigstens einen Datenereignisstrom und wenigstens einen analytischen Datenstrom empfängt,
- für jede Schnittstelle, die eine hybride Funktionsweise aufweist, Bestimmen für die von der Schnittstelle empfangenen Ereignisdatenströme einer gegebenen Dienstklasse (k) einer äquivalenten virtuellen Warteschlange, die der gegebenen Dienstklasse (k) zugeordnet ist, wobei die äquivalente virtuelle Warteschlange eine äquivalente Dienstrate (TRFE(k)) aufweist, mit dem Ziel das Datenübertragungsnetz zu bewerten, indem der Schnittstelle die äquivalente virtuelle Warteschlange zugeordnet wird, die die Ereignisdatenströme der gegebenen Dienstklasse (k) empfängt.

2. Verfahren gemäß Anspruch 1, welches einen früheren Schritt umfasst, der darin besteht für eine Vielzahl von Datenströmen, die analytische Datenströme und Ereignisdatenströme umfassen, denen Dienstklassen (k) zugeordnet sind, Routingwege zu bestimmen, wobei jeder Weg durch eine Vielzahl von Knotenschnittstellen verläuft.

**3.** Verfahren gemäß Anspruch 1 oder 2, bei dem der Schritt der Bestimmung einer äquivalenten virtuellen Warteschlange Unterschritte umfasst, die darin bestehen:

- die von der Schnittstelle empfangenen Ereignisdatenströme einer Dienstklasse (k) in einen äquivalenten analytischen Strom ($\lambda_{e_k}$) umzuwandeln, und
- die äquivalente Dienstrate (TRFE(k)) in Abhängigkeit eines Dienstgesetzes (F) zu bestimmen, das die von der Schnittstelle empfangenen Datenströme unter Berücksichtigung des äquivalenten analytischen Datenstroms regelt.

**4.** Verfahren gemäß Anspruch 3, bei dem das Dienstgesetz ($\Gamma$) die analytischen Datenströme und die äquivalenten analytischen Datenströme verschiedener Dienstklassen (k=1...K) berücksichtigt, die in die verschiedenen Warteschlangen der Schnittstelle (11, 12) eingeteilt sind.

**5.** Verfahren gemäß einem der Ansprüche 3 oder 4, bei dem der Schritt der Bestimmung einer äquivalenten Dienstrate einen Unterschritt umfasst, der darin besteht:

- den äquivalenten analytischen Strom ($\lambda_{e_k}$) mit analytischen Strömen ($\lambda_{e_k}$) zu aggregieren, die von derselben Warteschlange (k) empfangen werden wie die Ereignisdatenströme,
- Lösen eines aggregierten Systems analytischer Gleichungen, die vom Dienstgesetz ($\Gamma$) abhängen, in Abhängigkeit der aggregierten analytischen Ströme.

**6.** Verfahren gemäß Anspruch 5, bei dem die Lösung des aggregierten Gleichungssystems zum Erhalt einer Anzahl in derselben Warteschlange (k) aggregierter Datenpakete führt.

**7.** Verfahren gemäß einem der Ansprüche 5 oder 6, bei dem das Gleichungssystem die folgenden Parameter berücksichtigt:

- einen Wert der mittleren Größe der Datenpakete,
- einen Varianzwert der Datenpakete,
- einen mittleren Wert der Ankunftsdurchflüsse der Datenpakete für jeden Strom, und/oder
- eine Paketreihung, die auf die Warteschlangen der Schnittstelle angewendet wird.

**8.** Verfahren gemäß einem der vorhergehenden Ansprüche, bei dem der Schritt der Bestimmung einer äquivalenten Dienstrate (TRFE(k)) die folgenden Parameter berücksichtigt:

- eine mittlere Größe der Pakete ($D_k$) der von der Warteschlange (k) der Schnittstelle empfangenen Ströme,
- Momente der Ordnung 2 der Größe von Paketen ($\sigma D_e$, $\sigma D_{e_k}$) der von der Warteschlange (k) empfangenen Ströme,
- eine globale, der Schnittstelle zugeordnete Dienstrate (TME),
- ein der Schnittstelle zugeordnetes Dienstgesetz ($\Gamma$), und/oder
- einen Kapazitätsparameter ($C_k$) einer Warteschlange der Schnittstelle.

**9.** Verfahren gemäß einem der vorhergehenden Ansprüche, bei dem die Schnittstelle in eine erste Bank zerlegt wird, die K Warteschlangen gemäß einer Paketreihung nach Prioritäten enthält, sowie eine zweite Bank, die N Warteschlangen gemäß einer Paketreihung durch gerechte Verwaltung der Bandbreite mit Gewichtung ($\alpha_k$) enthält.

**10.** Verfahren gemäß Anspruch 9, welches die Schritte umfasst:

- Auflösung der zweiten Bank, die daraus besteht, für jede Warteschlange (k, $k \in \{1,...N\}$) der ersten Bank, Lastwerte zu bestimmen, die den in der Schlange empfangenen Ereignisströmen ($X_{e_k}$) und den analytischen Strömen ($X_{a_{ik}}$) zugeordnet sind, indem man die zweite Bank mit einer K+1-ten Warteschlange der ersten Bank gleichstellt, dann
- Auflösung der ersten Bank, die darin besteht, für jede Warteschlange (k, $k \in \{N+1,...N+K\}$) der zweiten Bank Lastwerte zu bestimmen, die den in der Schlange empfangenen Ereignisströmen ($X_{e_k}$) und analytischen Strömen ($X_{a_{ik}}$) zugeordnet sind.

**11.** Verfahren gemäß Anspruch 9 oder 10, bei dem der Auflösungsschritt der zweiten Bank die Schritte umfasst, die darin bestehen:

- eine globale Last der N Warteschlangen der zweiten Bank zu berechnen,
- für jede Warteschlange k der zweiten Bank, Bestimmen einer minimalen Elementarlast und einer maximalen Restlast, indem man berücksichtigt, dass der Gewichtungskoeffizient der Schlange k maximal ist und dass ein Gewichtungskoeffizient der anderen, von k verschiedenen Schlangen der zweiten Bank minimal ist, und Einteilen der Restlast der Warteschlangen, die von k verschieden sind, im Verhältnis einer Verwendungsrate $\rho_k$ dieser Warteschlangen,
- ausgehend von der globalen Last, der minimalen Last und der maximalen Last für jede Warteschlange der zweiten Bank, Durchführen einer multilinearen Interpolation zwischen den 2*N minimalen und maximalen Werten mit den Werten, die aus der Gewichtungsrate $\alpha_k$ der Warteschlangen k bekannt sind.

12. Verfahren gemäß einem der vorhergehenden Ansprüche, bei dem der Schritt der Bestimmung einer äquivalenten Dienstrate (TRFE (k)) in einem regelmäßigen Zeitintervall ($\Delta t_p$) erneuert wird.

13. Vorrichtung zur digitalen Bewertung eines Datenübertragungsnetzes, wobei die Vorrichtung eine Verarbeitungseinheit umfasst, die ausgelegt ist, um die Schritte des Verfahrens gemäß einem der Ansprüche 1 bis 12 auszuführen.

## FIG.1

## FIG.2

FIG.3

FIG.4

DEBUT DE LA
SIMULATION

DETERMINATION
D'UN CHEMIN DE
ROUTAGE — 100

INITIALISATION
DES MODES DE
SIMULATION DES
INTERFACES — 200

SIMULATION
DES FLUX — 300

MESURE DES TAUX
D'ARRIVEE DES FLUX
ANALYTIQUES ET
EVENEMENTIELS — 400

DETERMINATION — 500
D'UNE FILE D'ATTENTE
VIRTUELLE AYANT UN
TAUX DE SERVICE
EQUIVALENT

DETERMINATION — 600
D'UN PARAMETRAGE
DE CONVERGENCE

$\Delta tp$

FIN DE LA
SIMULATION

FIG.5

29

FIG.6

5,24

5,21

5,22

5,23

50

4,17,63

7

FIG.7

EP 1 864 451 B1

Nombre de paquets dans la file

Départ paquet 1  Départ paquet 2  Départ paquet 3  Départ paquet 4  Départ paquet 5  Départ paquet 6

6

5

4

3

2

1

1  2  3  4  5  6

arrivée des paquets

Temps

1  4  5  7  9

2  6  10

3  8

FIG.8

EP 1 864 451 B1

EP 1 864 451 B1

FIG.9

FIG10

$\lambda a_{11}$

$\lambda e_1$

$\lambda a_{12}$

$\lambda e_3$

$Xa_{11}$

$Xe_1$

$Xa_{12}$

$Xe_3$

TRFE(3)

TRFE(1)

TME

$da_{11}$

$da_{12}$

## FIG.11

**EP 1 864 451 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Averill M. Law ; W. David Kelton.** Simulation Modeling and Analysis. McGraw-Hill, 2000, 760
- **Sheldon M. Ross.** Simulation. Academic Press, 27 Décembre 2001
- **I. Mitrani.** Simulation Techniques for Discrete Event Systems. Cambridge University Press, 09 Décembre 1982, 194
- **Jerry Banks ; John S. Carson ; Barry L. Nelson ; David M. Nicol.** Discrete-Event System Simulation. Prentice Hall, 15 Août 2000
- **Jean-Marie Garcia et al.** Calculateurs Parallèles volume. *Modélisation Différentielle Du Trafic et Simulation Hybride Distribuée,* 2001, vol. 13 (6), 635-664
- **David Gauchard.** *Simulation hybride des réseaux IP-Diff-Serv-MPLS multi-services sur environnement d'exécution distribuée,* 25 Avril 2003

- **Robert B. Cooper.** Introduction to Queueing Theory. 1981
- **Jacob W. Cohen.** *The Single Server Queue,* 1969
- **Jean-Marie Garcia et al.** *Modélisation Différentielle Du Trafic et Simulation Hybride Distribuée,* 2001, vol. 13 (6), 635-664
- **Jean-Marie Garcia et al.** Calculateurs Parallèles volume. *Modélisation Différentielle Du Trafic et Simulation Hybride Distribuée,* 1981, vol. 18 (3), 635-664
- **Jean-Marie Garcia et al.** Calculateurs Parallèles volum. *Modélisation Différentielle Du Trafic et Simulation Hybride Distribuée,* 2001, vol. 13 (6), 635-664